# EUROPÄISCHE PATENTSCHRIFT

(11) **EP 3 419 859 B1**
(45) Veröffentlichungstag und Bekanntmachung des Hinweises auf die Patenterteilung: **06.04.2022**
(21) Anmeldenummer: 17702619.2
(22) Anmeldetag: 01.02.2017
(51) Int. Cl.: B60Q 1/24, B60Q 1/26, B60Q 1/32

(54) **KRAFTFAHRZEUG MIT EINER UMFELDBELEUCHTUNGSEINRICHTUNG**
MOTOR VEHICLE HAVING A SURROUNDINGS LIGHTING DEVICE
VÉHICULE À MOTEUR DOTÉ D'UN DISPOSITIF D'ÉCLAIRAGE PÉRIPHÉRIQUE

(30) Priorität: 23.02.2016 DE 102016202752
(43) Veröffentlichungstag der Anmeldung: 02.01.2019
(73) Patentinhaber: Bayerische Motoren Werke Aktiengesellschaft, 80809 München (DE)
(72) Erfinder: HAUSMANN, Thomas, 81369 Muenchen (DE); KUHL, Patrick, 85579 Neubiberg (DE)
(86) Internationale Anmeldenummer: PCT/EP2017/052114
(87) Internationale Veröffentlichungsnummer: WO 2017/144247

(56) Entgegenhaltungen:
- WO-A1-2006/047306
- DE-A1-102013 016 347
- DE-A1-102013 211 877
- DE-U1-202011 000 429
- US-A1- 2015 224 919

## Beschreibung

Die Erfindung betrifft ein Kraftfahrzeug mit einer Umfeldbeleuchtungseinrichtung.

Aus dem Stand der Technik sind Umfeldbeleuchtungseinrichtungen bekannt, mit denen ein Bereich des Bodens in der Umgebung des Kraftfahrzeugs beleuchtet werden kann.

Aus der Druckschrift DE 10 2013 211 877 A1 ist ein Kraftfahrzeug mit einer Umfeldbeleuchtungseinrichtung beschrieben, die mittels eines oder mehrerer Projektionsmodule umfassend ein Array aus Projektionsoptiken eine Lichtverteilung neben dem Fahrzeug nach Art eines Lichtteppichs generiert.

Es ist ferner bekannt, in den Türaußengriff eines Fahrzeugs eine Umfeldbeleuchtungseinrichtung zu integrieren, welche bei der Entriegelung des Fahrzeugs aktiviert wird. Ebenso gibt es Ausstiegsbeleuchtungen, die in der Unterkante der Türverkleidung auf der Innenseite einer Fahrzeugtür verbaut sind. Darüber hinaus ist es bekannt, ein Logo mittels eines Projektionsmoduls im Außenspiegel einer Fahrzeugtür auf den Boden neben dieser Fahrzeugtür zu projizieren.

In der Druckschrift DE 20 2011 000 429 U1 ist eine Projektionslampe für ein Fahrzeug mit Begrüßungsfunktion beschrieben. Mit dieser Projektionslampe kann eine Lichtverteilung in der Form eines Logos auf den Boden im Umfeld des Kraftfahrzeugs projiziert werden. Die Projektionslampe kann beispielsweise im Sockel einer Fahrzeugtür oder im Türrahmen einer Fahrzeugtür angeordnet sein.

Aufgabe der Erfindung ist es, ein Kraftfahrzeug mit einer Umfeldbeleuchtungseinrichtung zu schaffen, welche eine gute und auffallende Ausleuchtung des Bodens benachbart zu einer Fahrzeugtür sicherstellt.

Diese Aufgabe wird durch das Kraftfahrzeug gemäß Patentanspruch 1 gelöst. Weiterbildungen der Erfindung sind in abhängigen Ansprüchen definiert.

Das erfindungsgemäße Kraftfahrzeug, welches insbesondere ein PKW ist, umfasst eine Umfeldbeleuchtungseinrichtung zur Beleuchtung eines Bereichs des Bodens in der Umgebung des Kraftfahrzeugs. Die Umfeldbeleuchtungseinrichtung beinhaltet ein erstes Projektionsmodul, welches in einem unbeweglichen Karosserieteil benachbart zu einer schwenkbaren Fahrzeugtür des Kraftfahrzeugs und insbesondere in einem Türschweller der Fahrzeugtür angeordnet ist und ein Array aus Projektionsoptiken umfasst. Unter einem unbeweglichen Karosserieteil ist ein Teil der Fahrzeugkarosserie zu verstehen, welches nicht mit der Fahrzeugtür verschwenkt. Das Array projiziert bei angeschaltetem ersten Projektionsmodul mit dem Licht zumindest eine Lichtquelle, die zum ersten Projektionsmodul gehört, eine Lichtverteilung auf den Boden benachbart zum unbeweglichen Karosserieteil und insbesondere neben dem unbeweglichen Karosserieteil. Die Fahrzeugtür ist insbesondere eine Personeneinstiegstür des Fahrzeugs, wie z.B. die Fahrertür oder Beifahrertür oder ggf. auch eine Fondtür. Das Anschalten des ersten Projektionsmoduls und auch des weiter unten beschriebenen zweiten bzw. dritten Projektionsmoduls wird in der Regel durch das Anschalten des oder der zugehörigen Lichtquellen bewirkt.

Neben dem ersten Projektionsmodul umfasst die Umfeldbeleuchtungseinrichtung ein zweites Projektionsmodul, welches an der Außenseite der Fahrzeugtür angeordnet ist und somit zusammen mit der Fahrzeugtür verschwenkt. Dieses Projektionsmodul umfasst zumindest eine Projektionsoptik, welche bei angeschaltetem zweiten Projektionsmodul mit dem Licht zumindest einer Lichtquelle, die zu dem zweiten Projektionsmodul gehört, ein Piktogramm auf den Boden benachbart zur und insbesondere neben der Fahrzeugtür projiziert. Hier und im Folgenden ist der Begriff des Piktogramms weit zu verstehen und kann neben bildlichen Darstellungen bzw. Logos ggf. auch aus Text bestehen bzw. entsprechenden Text umfassen.

Die im erfindungsgemäßen Kraftfahrzeug verbaute Umfeldbeleuchtungseinrichtung ist derart ausgestaltet (d.h. derart mittels einer Steuereinrichtung steuerbar), dass bei der Detektion eines Ereignisses, welches durch einen Benutzer in der Umgebung des Kraftfahrzeugs ausgelöst wird, das erste Projektionsmodul angeschaltet wird und zeitgleich oder zeitversetzt das zweite Projektionsmodul angeschaltet wird, wodurch auf die Lichtverteilung des ersten Projektionsmoduls das Piktogramm des zweiten Projektionsmoduls (bei geschlossener Fahrzeugtür) projiziert wird.

Die Erfindung weist den Vorteil auf, dass durch die Verwendung des ersten Projektionsmoduls eine sehr gute Ausleuchtung des Bereichs benachbart zur Fahrzeugtür erreicht wird, wobei diese Ausleuchtung durch den Effekt der Einblendung eines Piktogramms besonders auffallend und optisch ansprechend ausgestaltet ist.

In einer besonders bevorzugten Ausführungsform wird als Projektionsmodul ein Projektionsdisplay verwendet, welches in dem Dokument DE 10 2009 024 894 A1 bzw. in dem

Dokument DE 10 2011 076 083 A1 bzw. in der bereits eingangs genannten Druckschrift

DE 10 2013 211 877 A1 beschrieben ist. Als Lichtquelle(n) werden im ersten Projektionsmodul und vorzugsweise auch im zweiten und im weiter unten beschriebenen dritten Projektionsmodul eine oder mehrere LEDs bzw. ggf. auch eine oder mehrere Laserdioden verwendet.

In einer weiteren bevorzugten Ausführungsform ist das erste Projektionsmodul derart ausgestaltet, dass jede Projektionsoptik des Arrays aus Projektionsoptiken ein Einzelbild auf den Boden projiziert, das im Wesentlichen die gesamte Lichtverteilung abdeckt, wobei die Lichtverteilung eine Überlagerung der Einzelbilder der Projektionsoptiken ist. Ebenso ist es möglich, dass jede Projektionsoptik eines jeweiligen Teilarrays aus Projektionsoptiken ein Einzelbild auf den Boden projiziert, das im Wesentlichen die gleiche Teillichtverteilung abdeckt, wobei jede Teillichtverteilung eine Überlagerung der Einzelbilder der zu dem Teilarray gehörenden Projektionsoptiken ist. Mit den beiden soeben beschriebenen Ausführungsformen wird die Generierung der Lichtverteilung (mit verminderter Lichthelligkeit) auch dann sichergestellt, wenn der Lichtaustritt des Projektionsmoduls teilweise verschmutzt ist. Es kommt somit nicht zu einem Verdecken bzw. Abschneiden der Lichtverteilung in bestimmten Bereichen.

In einer bevorzugten Variante ist das Ereignis, welche das Anschalten des ersten und zweiten Projektionsmoduls bewirkt, eine Bedienung eines mobilen Identifikationsgebers durch den Benutzer in der Umgebung des Kraftfahrzeugs, vorzugsweise eine Bedienung des mobilen Identifikationsgebers zum Entriegeln des Kraftfahrzeugs. Ebenso kann das Ereignis das Unterschreiten eines Abstands zwischen dem Kraftfahrzeug und dem mobilen Identifikationsgeber sein. In beiden Fällen wird der mobile Identifikationsgeber vom Benutzer mitgeführt und ist dem Kraftfahrzeug zugeordnet. Der Identifikationsgeber stellt somit eine mobile Einheit zum schlüssellosen Zugang zum Kraftfahrzeug dar. Vorzugsweise wird das Anschalten des ersten und zweiten Projektionsmoduls bei der Detektion von jedem der soeben genannten Ereignisse ausgelöst. Mit dieser Variante der Erfindung wird sichergestellt, dass das Anschalten des ersten und zweiten Projektionsmoduls mit der räumlichen Nähe bzw. der Annäherung des Benutzers an das Kraftfahrzeug korreliert, was darauf hindeutet, dass der Benutzer in das Fahrzeug einsteigen möchte.

In einer weiteren bevorzugten Variante des erfindungsgemäßen Kraftfahrzeugs werden beim Anschalten des ersten Projektionsmoduls zeitlich aufeinander folgend Teilbereiche der Lichtverteilung auf den Boden projiziert, bis die gesamte Lichtverteilung auf den Boden projiziert ist. Dies kann dadurch erreicht werden, dass unterschiedliche Teilarrays in dem Array aus Projektionsoptiken zur Ausleuchtung verschiedener Bereiche auf dem Boden benachbart zum Fahrzeug vorgesehen sind. In dieser Variante der Erfindung wird bereits beim Projizieren der Lichtverteilung durch das erste Projektionsmodul eine auffallende Dynamik erzeugt. In einer bevorzugten Ausgestaltung der soeben beschriebenen Ausführungsform wird die Lichtverteilung nach Art eines Ausrollens eines Lichtteppichs aktiviert, z.B. von einem Ende der Fahrzeugtür zu dessen anderem Ende.

In einer weiteren bevorzugten Ausführungsform ist das zweite Projektionsmodul im Außenspiegel der Fahrzeugtür verbaut. Ebenso kann das zweite Projektionsmodul in einem Kamerahalter der Fahrzeugtür verbaut sein. Vorzugsweise dient der Kamerahalter zur Befestigung einer Kamera, die den rückwärtigen Bereich des Fahrzeugs erfasst und in diesem Sinne einen Außenspiegel ersetzt.

In einer weiteren Ausführungsform des erfindungsgemäßen Kraftfahrzeugs ist ein vorgegebener Bereich in der Lichtverteilung, die durch das erste Projektionsmodul generiert wird, gegenüber dem Licht der Lichtverteilung benachbart zum vorgegebenen Bereich optisch abgesetzt, wobei in diesem vorgegebenen Bereich das Piktogramm projiziert wird, das durch das zweite Projektionsmodul generiert wird. Zum Beispiel kann der vorgegebene Bereich einen dunkleren Abschnitt im Vergleich zu der Lichtverteilung in der Umgebung zu diesem Bereich darstellen.

In einer weiteren Ausführungsform des erfindungsgemäßen Kraftfahrzeugs ist die Umfeldbeleuchtungseinrichtung derart ausgestaltet (d.h. derart mittels einer Steuereinrichtung steuerbar), dass nach Detektion des Ereignisses und nach Anschalten des ersten und zweiten Projektionsmoduls das Piktogramm des zweiten Projektionsmoduls beim Öffnen der Fahrzeugtür unmittelbar ausgeschaltet oder abgedimmt (d.h. allmählich ausgeschaltet) wird. Der Begriff des Abdimmens ist weit zu verstehen und kann eine kontinuierliche Abnahme der Helligkeit oder auch eine schrittweise Abnahme der Helligkeit umfassen. In dieser Variante der Erfindung wird berücksichtigt, dass sich das Piktogramm beim Öffnen der Fahrzeugtür durch das Verschwenken des zweiten Projektionsmoduls aus der Lichtverteilung herausbewegt.

In einer weiteren, besonders bevorzugten Ausführungsform umfasst das erfindungsgemäße Kraftfahrzeug ein drittes Projektionsmodul, welches an der Innenseite der Fahrzeugtür angeordnet ist und zumindest eine Projektionsoptik umfasst, welche beim Öffnen der Fahrzeugtür nach Anschalten des ersten und zweiten Projektionsmoduls mit dem Licht zumindest einer Lichtquelle, die zu dem dritten Projektionsmodul gehört, ein weiteres Piktogramm auf den Boden benachbart zu und insbesondere neben der Fahrzeugtür projiziert, wobei sich das weitere Piktogramm beim Öffnen der Fahrzeugtür in die Lichtverteilung hinein bewegt. Hierdurch wird ein besonders ansprechender optischer Effekt beim Öffnen der entsprechenden Fahrzeugtür erreicht.

In einer bevorzugten Variante weist das weitere Piktogramm die gleiche Form und vorzugsweise auch die gleiche Größe wie das Piktogramm auf, welches durch das zweite Projektionsmodul generiert wird. Vorzugsweise ist das weitere Piktogramm jedoch farbig ausgestaltet, wohingegen das erste Piktogramm vorzugsweise ein farbloses Piktogramm nur mit Weißlichtanteilen ist. Ferner ist auch die mit dem ersten Projektionsmodul generierte Lichtverteilung vorzugsweise eine farblose Lichtverteilung nur mit Weißlichtanteilen.

In einer weiteren, besonders bevorzugten Variante der Erfindung ist beim maximalen Öffnungswinkel der Fahrzeugtür das weitere Piktogramm im Wesentlichen an der gleichen Position wie das Piktogramm des zweiten Projektionsmoduls bei geschlossener Fahrzeugtür. Auf diese Weise wird der Effekt erzeugt, dass ein sich aus der Lichtverteilung heraus bewegendes Piktogramm durch ein anderes Piktogramm ersetzt wird. Vorzugsweise wird diese Ausführungsform mit der oben beschriebenen Variante der Erfindung kombiniert, bei der das Piktogramm des zweiten Projektionsmoduls beim Öffnen der Fahrzeugtür unmittelbar ausgeschaltet bzw. abgedimmt wird.

In einer weiteren Variante des erfindungsgemäßen Kraftfahrzeugs wird das weitere Piktogramm, welches über das dritte Projektionsmodul erzeugt wird, beim Öffnen der Fahrzeugtür aufgedimmt, d.h. die Helligkeit des weiteren Piktogramms nimmt langsam zu. Hierdurch wird ein weiterer dynamischer Effekt erzeugt.

Das im Vorangegangenen beschriebene zweite und dritte Projektionsmodul umfasst vorzugsweise nur eine Projektionsoptik, kann jedoch ggf. genauso ausgestaltet sein wie das erste Projektionsmodul, d.h. es kann auch ein Array aus Projektionsoptiken umfassen.

Ausführungsbeispiele der Erfindung werden nachfolgend anhand der beigefügten Figuren detailliert beschrieben.

Es zeigen:
- Fig. 1: eine Seitenansicht eines erfindungsgemäßen Kraftfahrzeugs mit einer Umfeldbeleuchtungseinrichtung;
- Fig. 2: eine Draufsicht auf das Kraftfahrzeugs der Fig. 1; und
- Fig. 3 bis Fig. 5: jeweilige Draufsichten auf den Boden neben der Fahrertür des erfin-dungsgemäßen Kraftfahrzeugs, welche den Vorgang des Anschaltens der verbauten Projektionsmodule verdeutlichen.

Nachfolgend wird eine Ausführungsform eines erfindungsgemäßen Kraftfahrzeugs mit einer Umfeldbeleuchtungseinrichtung beschrieben, welche für jede Seite des Kraftfahrzeugs jeweils drei Projektionsmodule zur seitlichen Beleuchtung des Bereichs neben den Personeneinstiegstüren des Kraftfahrzeugs umfasst.

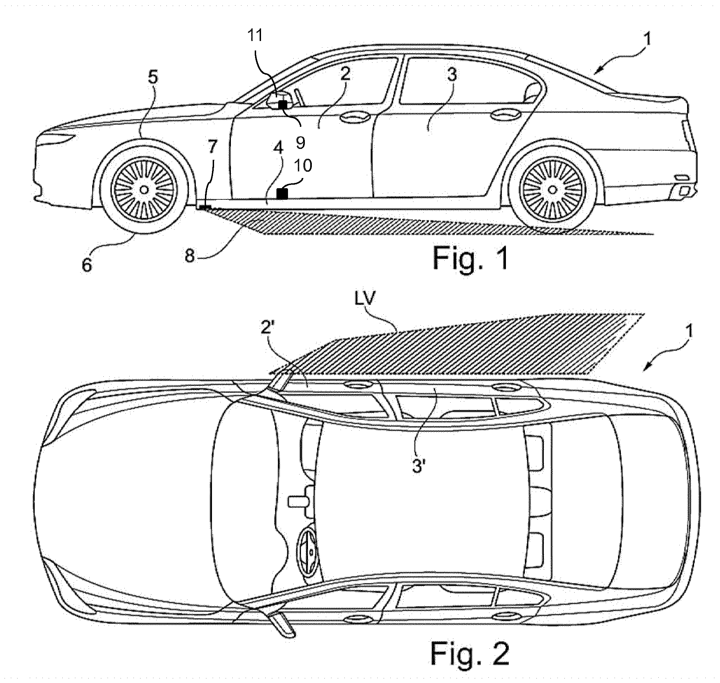

Fig. 1 zeigt eine Seitenansicht des Kraftfahrzeugs in der Form des PKWs 1. Der PKW umfasst auf der dargestellten linken Seite eine Fahrertür 2 sowie eine Fondtür 3. Analog sind auf der gegenüberliegenden Seite des Fahrzeugs (Fig. 2) eine Beifahrertür 2' und eine dahinter liegende Fondtür 3' vorgesehen. In der Ausführungsform der Fig. 1 ist in dem Türschweller 4 unterhalb der Türen 2 und 3 ein erstes Projektionsmodul 7 verbaut. Das Projektionsmodul befindet sich am vorderen Ende des Türschwellers 4 im Bereich des Radkastens 5, der das Rad 6 umgibt. Das erste Projektionsmodul umfasst ein Array aus Mikrolinsen, um hierdurch gezielt eine vorbestimmte Lichtverteilung LV neben den Türen 2 und 3 des Kraftfahrzeugs zu generieren.

Als erstes Projektionsmodul kommt vorzugsweise das Projektionsdisplay zum Einsatz, das in den bereits oben genannten Druckschriften DE 10 2009 024 894 A1 bzw. DE 10 2011 076 083 A1 bzw. DE 10 2013 211 877 A1 beschrieben ist. In diesem Projektionsmodul wird eine Mehrkanaloptik mit einer zweidimensionalen Anordnung von Projektionsoptiken umfassend Mikrolinsen zur Projektion eines Bildes genutzt. In der hier beschriebenen Ausführungsform umfasst das Projektionsmodul eine LED als Lichtquelle. Das Projektionsmodul ist sehr kompakt und weist Abmessungen im Zentimeterbereich auf. In einer Variante liegen die Breite, Höhe und Länge des Projektionsmoduls jeweils bei in etwa 15 mm. Jede Projektionsoptik des Projektionsmoduls erzeugt das gleiche Einzelbild, und das Gesamtbild setzt sich aus der Überlagerung dieser Einzelbilder zusammen. In der hier beschriebenen Ausführungsform ist das Gesamtbild eine entsprechende Lichtverteilung, die auf den Boden in der Umgebung des Kraftfahrzeugs projiziert wird. In Fig. 1 ist die Ausbreitungsrichtung des auf den Boden geworfenen Lichts des Projektionsmoduls 7 mit Bezugszeichen 8 bezeichnet.

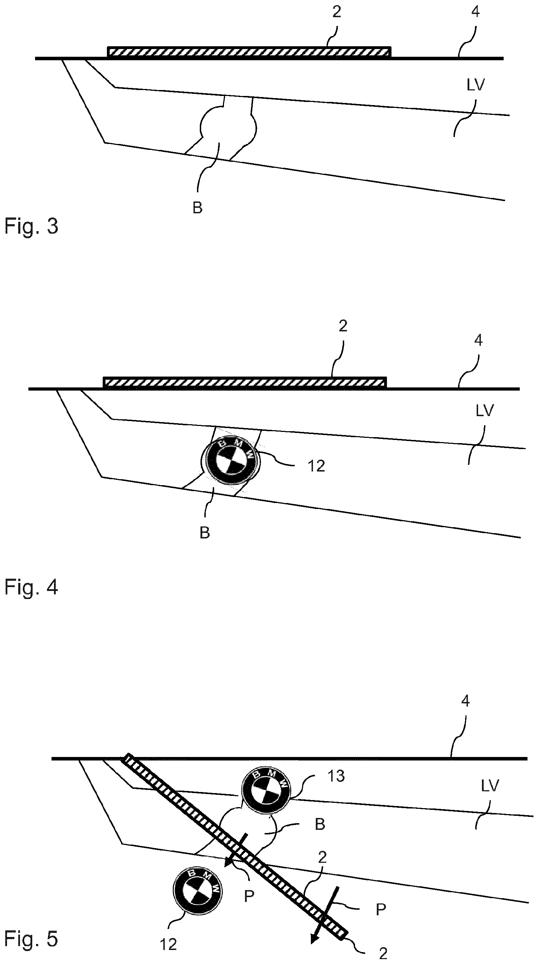

Neben dem ersten Projektionsmodul 7 ist ferner im Außenspiegel 11 der Fahrertür 2 ein zweites Projektionsmodul 9 verbaut, welches in der hier beschriebenen Ausführungsform nur aus einer einzelnen Projektionsoptik und nicht aus einem Array von Projektionsoptiken besteht. Mit diesem zweiten Projektionsmodul wird zusätzlich zur Lichtverteilung LV ein Piktogramm in der Form eines Logos neben die Fahrertür projiziert, wie weiter unten anhand von Fig. 3 bis Fig. 5 erläutert wird. Darüber hinaus ist in der hier beschriebenen Ausführungsform in der Türtasche an der Innenseite der Fahrertür 2 ein drittes Projektionsmodul 10 vorgesehen, welches analog zu dem zweiten Projektionsmodul 9 nur eine einzelne Projektionsoptik aufweist. Beim Öffnen der Fahrertür projiziert dieses dritte Projektionsmodul 10 ein weiteres Piktogramm in der Form eines Logos auf die Lichtverteilung LV, wie ebenfalls weiter unten anhand von Fig. 3 bis Fig. 5 erläutert wird.

Die auf den Boden neben dem Fahrzeug 1 projizierte Lichtverteilung LV des ersten Projektionsmoduls 7 ist aus der Draufsicht der Fig. 2 ersichtlich und erzeugt den Effekt eines Lichtteppichs. Dabei ist zu beachten, dass die Lichtverteilung anders als in Fig. 1 rechts neben dem Fahrzeug 1 benachbart zu den Türen 2' und 3' wiedergegeben ist. Dies ist möglich, denn im Kraftfahrzeug sind symmetrisch auf der rechten und linken Seite erste Projektionsmodule 7 verbaut. Mit anderen Worten werden sowohl auf der linken Seite als auch auf der rechten Seite des Fahrzeugs benachbart zu den Einstiegstüren entsprechend gespiegelte Lichtverteilungen erzeugt. In gleicher Weise sind symmetrisch auf der linken und rechten Seite zweite Projektionsmodule 9 in den jeweiligen Außenspiegeln und dritte Projektionsmodule 10 in den jeweiligen Türtaschen verbaut. Die Projektionsmodule auf beiden Seiten des Kraftfahrzeugs werden nach dem gleichen, weiter unten beschriebenen Schema aktiviert.

Aus Übersichtlichkeitsgründen ist in Fig. 2 nur die Lichtverteilung benachbart zu den Türen 2' und 3' wiedergegeben. In dem Ausführungsbeispiel der Fig. 2 stellt die Lichtverteilung LV ein Muster aus parallelen Streifen aus Weißlicht dar, welche schräg zur Längsachse des Fahrzeugs verlaufen. Die Streifen sind dunkel dargestellt und repräsentieren in der tatsächlichen Lichtverteilung helle Balken auf dem Boden neben dem Fahrzeug. Wie aus Fig. 2 ersichtlich wird, weitet sich die Lichtverteilung von der vorderen Tür 2' hin zum Bereich hinter der Tür 3' auf. Man erkennt ferner, dass das Streifmuster der Lichtverteilung im hinteren Bereich verschwimmt, wobei dieser Effekt durch eine abnehmende Helligkeit der Streifen generiert wird.

Das dargestellte Streifenmuster ist lediglich beispielhaft für eine generierte Lichtverteilung, und es können beliebige andere Muster erzeugt werden. Insbesondere kann durch die Lichtverteilung gegebenenfalls auch ein Punktmuster wiedergegeben werden. Darüber hinaus können die Streifen des Streifenmusters auch in eine andere Richtung, z.B. parallel zur Fahrzeuglängsachse oder senkrecht zu dieser verlaufen.

Die soeben beschriebene Lichtverteilung LV enthält zur Erfüllung von gesetzlichen Anforderungen nur Weißlicht ohne farbige Bestandteile. In gleicher Weise enthält das durch das zweite Projektionsmodul 9 erzeugte Logo 12 (siehe Fig. 3 bis 5) nur Weißlicht, um hierdurch gesetzlichen Anforderungen zu genügen. Im Unterschied hierzu kann das durch das dritte Projektionsmodul 10 generierte Logo 13 farbig sein, da sich das Projektionsmodul 10 auf der Innenseite der Fahrzeugtür befindet und somit eine Innenbeleuchtung darstellt, welche auch farbig ausgestaltet sein darf.

Die in Fig. 1 und Fig. 2 gezeigte Umfeldbeleuchtungseinrichtung mit den Projektionsmodulen 7, 9 und 10 wird über eine (nicht gezeigte) Steuereinrichtung derart angesteuert, dass ein Lichtszenario mit hoher Dynamik erzeugt wird, wenn sich der Fahrer seinem Fahrzeug nähert. Das dynamische Lichtszenario kann durch zwei Ereignisse ausgelöst werden. Zum einen kann der Fahrer mittels eines mitgeführten Identifikationsgebers zum schlüssellosen Fahrzeugzugang das Entriegeln des Fahrzeugs durch Bedienung des Identifikationsgebers bewirken, woraufhin auch das dynamische Lichtszenario ausgelöst wird. Zum anderen kann vom Fahrzeug detektiert werden, dass der Abstand des vom Fahrer mitgeführten Identifikationsgebers zum Fahrzeug bzw. zu einer drahtlosen Empfängerposition am Fahrzeug eine vorbestimmte Schwelle unterschreitet, woraufhin ebenfalls das dynamische Lichtszenario gestartet wird. Der Ablauf des dynamischen Lichtszenarios für das Fahrzeug der Fig. 1 und Fig. 2 wird nachfolgend anhand von Fig. 3 bis Fig. 5 erläutert.

Fig. 3 bis Fig. 5 zeigen schematische Draufsichten auf den Boden neben der Fahrertür 2 des Fahrzeugs 1. Die Fahrertür 2 ist lediglich schematisch als schraffiertes Rechteck wiedergegeben. Ebenso ist der Türschweller 4 nur schematisch durch eine Linie angedeutet. Darüber hinaus ist aus Übersichtlichkeitsgründen nur die Kontur der Lichtverteilung LV ohne entsprechendes Muster wiedergegeben. Wird nunmehr die Annäherung des Fahrers an das Fahrzeug bzw. das Entriegeln des Fahrzeugs durch den mobilen Identifikationsgeber detektiert, wird zunächst die Lichtverteilung LV durch Anschalten des Projektionsmoduls 7 am Boden neben der Fahrertür 2 erzeugt. Dies ist in Fig. 3 wiedergegeben. Durch die Positionierung des Projektionsmoduls 7 am Türschweller 4 verändert sich die Position dieser Lichtverteilung auch dann nicht, wenn die Fahrertür 2 geöffnet wird. In der hier beschriebenen Ausführungsform enthält die Lichtverteilung LV einen Bereich B, der dunkler als die zum Bereich B benachbarten Abschnitte der Lichtverteilung sind. In diesem Bereich B werden anschließend die weiter unten erläuterten Logos 12 und 13 projiziert. Mittels der Lichtverteilung LV wird eine sehr gute Ausleuchtung des Bereichs vor der Fahrertür 2 erreicht, wodurch der Einstieg des Fahrers erleichtert wird.

Wie in Fig. 4 gezeigt, wird nach Anschalten des Projektionsmoduls 7 mit einem gewissen Zeitversatz, wie z.B. nach einigen Sekunden, das zweite Projektionsmodul 9 angeschaltet, welches dann das Logo 12 in die Lichtverteilung LV projiziert, und zwar genau in dem oben beschriebenen Bereich B. Da dieser Bereich dunkler als die restliche Lichtverteilung ist, kommt das Logo besonders gut zur Geltung. Bei dem Logo 12 handelt es sich um das Emblem des Fahrzeugherstellers. Es können jedoch auch beliebige andere Logos bzw. Piktogramme mittels des Projektionsmoduls 9 in die Lichtverteilung LV projiziert werden. Die Lichtverteilung der Fig. 4 wird solange beibehalten, bis der Fahrer des Fahrzeugs die Fahrertür 2 öffnet, was in Fig. 5 durch die Pfeile P angedeutet ist. Als Konsequenz des Öffnens der Fahrertür bewegt sich das Logo 12 aufgrund der Befestigung des Projektionsmoduls 9 am Außenspiegel 11 aus der Lichtverteilung LV heraus. Das Logo wird langsam abgedimmt, d.h. es wird immer dunkler, je größer der Öffnungswinkel der Fahrertür 2 wird. Beim maximalen Öffnungswinkel ist das Logo 12 nicht mehr sichtbar. Um den Fahrer jedoch beim Öffnen der Fahrertür weiterhin das Herstelleremblem anzuzeigen, wird das Projektionsmodul 10 in der Tasche auf der Türinnenseite beim Öffnen der Fahrertür aktiviert. Durch dieses Projektionsmodul wird das weitere Logo 13 auf den Boden neben dem Einstieg projiziert. Das Logo 13 entspricht in Form und Größe dem Logo 12, ist jedoch farbig ausgestaltet. Durch das Verschwenken der Fahrzeugtür bewegt sich das Logo 13 weg vom Türschweller 4. In der hier beschriebenen Ausführungsform nimmt das Logo 13 beim maximalen Öffnungswinkel der Fahrzeugtür genau die gleiche Position wie das Logo 12 bei geschlossener Fahrzeugtür ein. Das Logo 13 sowie die Lichtverteilung LV werden wieder abgeschaltet, sobald der Fahrer in das Fahrzeug eingestiegen ist und die Fahrertür geschlossen hat.

Die im Vorangegangenen beschriebenen Ausführungsformen der Erfindung weisen eine Reihe von Vorteilen auf. Insbesondere wird durch die Verwendung von mehreren Projektionsmodulen eine funktionale und designtechnisch bzw. graphisch abgestimmte Kombination mehrerer Lichtfunktionen erreicht. Diese Kombination bewirkt einerseits einen optimal ausgeleuchteten Zugang in das Fahrzeug und erzeugt andererseits eine hohe Dynamik und farbige Akzente in der Lichtgraphik am Boden.

### Bezugszeichenliste

- 1: Kraftfahrzeug
- 2, 2', 3, 3': Fahrzeugtüren
- 4: Türschweller
- 5: Radkasten
- 6: Rad
- 7: erstes Projektionsmodul
- 8: Lichtausbreitung
- LV: Lichtverteilung
- 9: zweites Projektionsmodul
- 10: drittes Projektionsmodul
- 11: Außenspiegel
- 12: Piktogramm
- 13: weiteres Piktogramm
- B: optisch abgesetzter Bereich in der Lichtverteilung

## Patentansprüche

1. Kraftfahrzeug, mit einer Umfeldbeleuchtungseinrichtung, wobei die Umfeldbeleuchtungseinrichtung umfasst:
- ein erstes Projektionsmodul (7), welches in einem unbeweglichen Karosserieteil (4) benachbart zu einer schwenkbaren Fahrzeugtür (2) des Kraftfahrzeugs (1) angeordnet ist und ein Array aus Projektionsoptiken umfasst, welches bei angeschaltetem ersten Projektionsmodul (7) mit dem Licht zumindest einer Lichtquelle, die zu dem ersten Projektionsmodul (7) gehört, eine Lichtverteilung (LV) auf den Boden benachbart zum unbeweglichen Karosserieteil (4) projiziert;
- ein zweites Projektionsmodul (9), welches an der Außenseite der Fahrzeugtür (2) angeordnet ist und zumindest eine Projektionsoptik umfasst, welche bei angeschaltetem zweiten Projektionsmodul (9) mit dem Licht zumindest einer Lichtquelle, die zu dem zweiten Projektionsmodul (9) gehört, ein Piktogramm (12) auf den Boden benachbart zur Fahrzeugtür (2) projiziert;
- wobei eine Steuereinrichtung vorgesehen ist, mittels der die Umfeldbeleuchtungseinrichtung derart steuerbar ist, dass bei der Detektion eines Ereignisses, welches durch einen Benutzer in der Umgebung des Kraftfahrzeugs (1) ausgelöst wird, das erste Projektionsmodul (7) angeschaltet wird und zeitgleich oder zeitversetzt das zweite Projektionsmodul (9) angeschaltet wird, wodurch auf die Lichtverteilung (LV) des ersten Projektionsmoduls (7) das Piktogramm (12) des zweiten Projektionsmoduls (9) projiziert wird.

2. Kraftfahrzeug nach Anspruch 1, **dadurch gekennzeichnet, dass** das Ereignis eine Bedienung eines mobilen Identifikationsgebers durch den Benutzer in der Umgebung des Kraftfahrzeugs (1) und/oder das Unterschreiten eines Abstands zwischen dem Kraftfahrzeug (1) und dem mobilen Identifikationsgeber ist, wobei der mobile Identifikationsgeber vom Benutzer mitgeführt wird und dem Kraftfahrzeug (1) zugeordnet ist.

3. Kraftfahrzeug nach Anspruch 1 oder 2, **dadurch gekennzeichnet, dass** beim Anschalten des ersten Projektionsmoduls (7) zeitlich aufeinanderfolgend Teilbereiche der Lichtverteilung (LV) auf den Boden projiziert werden, bis die gesamte Lichtverteilung (LV) auf den Boden projiziert ist.

4. Kraftfahrzeug nach einem der vorhergehenden Ansprüche, **dadurch gekennzeichnet, dass** das zweite Projektionsmodul (9) im Außenspiegel (11) der Fahrzeugtür (2) oder in einem Kamerahalter der Fahrzeugtür (1) verbaut ist.

5. Kraftfahrzeug nach einem der vorhergehenden Ansprüche, **dadurch gekennzeichnet, dass** sich ein vorgegebener Bereich (B) in der Lichtverteilung (LV) gegenüber dem Gebiet der Lichtverteilung (LV) benachbart zum vorgegebenen Bereich (B) optisch absetzt und in diesen vorgegebenen Bereich (B) das Piktogramm (11) des zweiten Projektionsmoduls (9) projiziert wird.

6. Kraftfahrzeug nach einem der vorhergehenden Ansprüche, **dadurch gekennzeichnet, dass** die Umfeldbeleuchtungseinrichtung derart ausgestaltet ist, dass nach Detektion des Ereignisses und nach Anschalten des ersten und zweiten Projektionsmoduls (7, 9) das Piktogramm (12) des zweiten Projektionsmoduls (9) beim Öffnen der Fahrzeugtür (2) unmittelbar ausgeschaltet oder abgedimmt wird.

7. Kraftfahrzeug nach einem der vorhergehenden Ansprüche, **dadurch gekennzeichnet, dass** das Kraftfahrzeug ein drittes Projektionsmodul (10) umfasst, welches an der Innenseite der Fahrzeugtür (2) angeordnet ist und zumindest eine Projektionsoptik umfasst, welche beim Öffnen der Fahrzeugtür nach Anschalten des ersten und zweiten Projektionsmoduls (7, 9) mit dem Licht zumindest einer Lichtquelle, die zu dem dritten Projektionsmodul (10) gehört, ein weiteres Piktogramm (13) auf den Boden benachbart zur Fahrzeugtür (2) projiziert, wobei sich das weitere Piktogramm (13) beim Öffnen der Fahrzeugtür (2) in die Lichtverteilung (LV) hinein bewegt.

8. Kraftfahrzeug nach Anspruch 7, **dadurch gekennzeichnet, dass** das weitere Piktogramm (13) die gleiche Form und vorzugsweise auch die gleiche Größe wie das Piktogramm (12) des zweiten Projektionsmoduls (7) aufweist.

9. Kraftfahrzeug nach Anspruch 7 oder 8, **dadurch gekennzeichnet, dass** beim maximalen Öffnungswinkel der Fahrzeugtür (2) das weitere Piktogramm (13) im Wesentlichen an der gleichen Position ist wie das Piktogramm (12) des zweiten Projektionsmoduls (9) bei geschlossener Fahrzeugtür (2).

10. Kraftfahrzeug nach einem der Ansprüche 7 bis 9, **dadurch gekennzeichnet, dass** das weitere Piktogramm (13) beim Öffnen der Fahrzeugtür aufgedimmt wird.

## Claims

1. Motor vehicle having a vicinity lighting device, wherein the vicinity lighting device comprises:
- a first projection module (7), which is arranged in an immobile vehicle body part (4) adjacent to a pivotable vehicle door (2) of the motor vehicle (1) and comprises an array which is made of projection optical units, which, when the first projection module (7) is switched on, projects a light distribution (LV) onto the ground adjacent to the immobile vehicle body part (4) with the light of at least one light source, which forms part of the first projection module (7);
- a second projection module (9), which is arranged on the outer side of the vehicle door (2) and comprises at least one projection optical unit which, when the second projection module (9) is switched on, projects a pictogram (12) onto the ground adjacent to the vehicle door (2) with the light of at least one light source which forms part of the second projection module (9);
- wherein a control device is provided, which can be used to control the vicinity lighting device in such a way that, if an event that is triggered by a user in the vicinity of the motor vehicle (1) is detected, the first projection module (7) is switched on and at the same time or after a delay the second projection module (9) is switched on, as a result of which the pictogram (12) of the second projection module (9) is projected onto the light distribution (LV) of the first projection module (7) .

2. Motor vehicle according to Claim 1, **characterized in that** the event is an operator control operation of a mobile identification encoder by the user in the vicinity of the motor vehicle (1) and/or the undershooting of a distance between the motor vehicle (1) and the mobile identification encoder, wherein the mobile identification encoder is carried along by the user and is assigned to the motor vehicle (1).

3. Motor vehicle according to Claim 1 or 2, **characterized in that**, when the first projection module (7) is switched on, partial regions of the light distribution (LV) are successively projected onto the ground until the entire light distribution (LV) is projected onto the ground.

4. Motor vehicle according to one of the preceding claims, **characterized in that** the second projection module (9) is installed in the external rear-view mirror (11) of the vehicle door (2) or in a camera holder of the vehicle door (1).

5. Motor vehicle according to one of the preceding claims, **characterized in that** a specified region (B) in the light distribution (LV) is visually offset with respect to the area of the light distribution (LV) adjacent to the specified region (B) and the pictogram (11) of the second projection module (9) is projected into this specified region (B).

6. Motor vehicle according to one of the preceding claims, **characterized in that** the vicinity lighting device is configured in such a way that, after the event has been detected and after the first and second projection modules (7, 9) have been switched on, the pictogram (12) of the second projection module (9) is immediately switched off or dimmed when the vehicle door (2) is opened.

7. Motor vehicle according to one of the preceding claims, **characterized in that** the motor vehicle comprises a third projection module (10), which is arranged on the inner side of the vehicle door (2) and comprises at least one projection optical unit which, when the vehicle door is opened after the first and second projection modules (7, 9) have been switched on, projects a further pictogram (13) onto the ground adjacent to the vehicle door (2) with the light of at least one light source which forms part of the third projection module (10), wherein the further pictogram (13) moves into the light distribution (LV) when the vehicle door (2) is opened.

8. Motor vehicle according to Claim 7, **characterized in that** the further pictogram (13) has the same shape and preferably also the same size as the pictogram (12) of the second projection module (7).

9. Motor vehicle according to Claim 7 or 8, **characterized in that**, at the maximum opening angle of the vehicle door (2), the further pictogram (13) is substantially at the same position as the pictogram (12) of the second projection module (9) when the vehicle door (2) is closed.

10. Motor vehicle according to one of Claims 7 to 9, **characterized in that** the further pictogram (13) is dimmed up when the vehicle door is opened.

## Revendications

1. Véhicule automobile doté d'un dispositif d'éclairage périphérique, le dispositif d'éclairage périphérique comprenant :
- un premier module de projection (7) qui est disposé dans une partie de carrosserie immobile (4) de manière adjacente à une portière de véhicule pivotante (2) du véhicule automobile (1) et comprend un réseau de systèmes optiques de projection qui, lorsque le premier module de projection (7) est activé, projette au moyen de la lumière d'au moins une source de lumière qui appartient au premier module de projection (7), une distribution de lumière (LV) sur le sol de manière adjacente à la partie de carrosserie immobile (4) ;
- un deuxième module de projection (9) qui est disposé sur la face extérieure de la portière de véhicule (2) et comprend au moins un système optique de projection qui, lorsque le deuxième module de projection (9) est activé, projette au moyen de la lumière d'au moins une source de lumière qui appartient au deuxième module de projection (9), un pictogramme (12) sur le sol de manière adjacente à la portière de véhicule (2) ;
- un dispositif de commande étant prévu au moyen duquel le dispositif d'éclairage périphérique peut être commandé de telle sorte que lors de la détection d'un événement qui est déclenché par un utilisateur dans l'environnement du véhicule automobile (1), le premier module de projection (7) est activé et simultanément ou de manière décalée, le deuxième module de projection (9) est activé, moyennent quoi le pictogramme (12) du deuxième module de projection (9) est projeté sur la distribution de lumière (LV) du premier module de projection (7).

2. Véhicule automobile selon la revendication 1, **caractérisé en ce que** l'événement est un actionnement d'un dispositif d'identification mobile par l'utilisateur dans l'environnement du véhicule automobile (1) et/ou le soupassement d'une distance entre le véhicule automobile (1) et le dispositif d'identification mobile, le dispositif d'identification mobile étant porté par l'utilisateur et étant associé au véhicule automobile (1).

3. Véhicule automobile selon la revendication 1 ou 2, **caractérisé en ce que** lors de l'activation du premier module de projection (7), de manière consécutive dans le temps, des zones partielles de la distribution de lumière (LV) sont projetées sur le sol jusqu'à ce que toute la distribution de lumière (LV) soit projetée sur le sol.

4. Véhicule automobile selon l'une quelconque des revendications précédentes, **caractérisé en ce que** le deuxième module de projection (9) est installé dans le rétroviseur extérieur (11) de la portière de véhicule (2) ou dans un support de caméra de la portière de véhicule (1).

5. Véhicule automobile selon l'une quelconque des revendications précédentes, **caractérisé en ce qu'**une zone prédéfinie (B) dans la distribution de lumière (LV) se distingue optiquement par rapport à la région de la distribution de lumière (LV) de manière adjacente à la zone prédéfinie (B), et le pictogramme (11) du deuxième module de projection (9) est projeté dans cette zone prédéfinie (B).

6. Véhicule automobile selon l'une quelconque des revendications précédentes, **caractérisé en ce que** le dispositif d'éclairage périphérique est configuré de telle sorte qu'après la détection de l'événement et après l'activation du premier et du deuxième module de projection (7, 9), le pictogramme (12) du deuxième module de projection (9) est désactivé ou atténué directement à l'ouverture de la portière de véhicule (2) .

7. Véhicule automobile selon l'une quelconque des revendications précédentes, **caractérisé en ce que** le véhicule automobile comprend un troisième module de projection (10) qui est disposé sur la face intérieure de la portière de véhicule (2) et comprend au moins un système optique de projection qui, à l'ouverture de la portière de véhicule après l'activation du premier et du deuxième module de projection (7, 9), projette au moyen de la lumière d'au moins une source de lumière qui appartient au troisième module de projection (10) un autre pictogramme (13) sur le sol de manière adjacente à la portière de véhicule (2), l'autre pictogramme (13) entrant dans la distribution de lumière (LV) à l'ouverture de la portière de véhicule (2) .

8. Véhicule automobile selon la revendication 7, **caractérisé en ce que** l'autre pictogramme (13) présente la même forme et de préférence aussi la même taille que le pictogramme (12) du deuxième module de projection (7) .

9. Véhicule automobile selon la revendication 7 ou 8, **caractérisé en ce qu'**avec un angle d'ouverture maximal de la portière de véhicule (2), l'autre pictogramme (13) se trouve substantiellement dans la même position que le pictogramme (12) du deuxième module de projection (9) lorsque la portière de véhicule (2) est fermée.

10. Véhicule automobile selon l'une quelconque des revendications 7 à 9, **caractérisé en ce que** l'autre pictogramme (13) est atténué à l'ouverture de la portière de véhicule.
